(19) Europäisches Patentamt
European Patent Office
Office européen des brevets

(11) EP 2 766 425 B1

## (12) FASCICULE DE BREVET EUROPEEN

(45) Date de publication et mention
de la délivrance du brevet:
**13.09.2017 Bulletin 2017/37**

(21) Numéro de dépôt: **12769674.8**

(22) Date de dépôt: **10.10.2012**

(51) Int Cl.:
*C08L 7/02* *(2006.01)*     *C08L 21/02* *(2006.01)*
*C08J 3/22* *(2006.01)*     *C08K 3/08* *(2006.01)*
*C08J 3/215* *(2006.01)*

(86) Numéro de dépôt international:
**PCT/EP2012/070028**

(87) Numéro de publication internationale:
**WO 2013/053734 (18.04.2013 Gazette 2013/16)**

(54) **METHODE POUR PREPARER UN MELANGE MAITRE D'ELASTOMERE DIENIQUE ET DE SILICE**

VERFAHREN ZUR MASTERBATCH-HERSTELLUNG AUS DIENELASTOMER UND SILICA

METHOD FOR PREPARING A MASTERBATCH OF DIENE ELASTOMER AND SILICA

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **11.10.2011 FR 1159176**

(43) Date de publication de la demande:
**20.08.2014 Bulletin 2014/34**

(73) Titulaire: **Compagnie Générale des Etablissements Michelin**
**63000 Clermont-Ferrand (FR)**

(72) Inventeurs:
• **DE GAUDEMARIS, Benoît**
**63040 Clermont-Ferrand**
**Cedex 9 (FR)**

• **LAFFARGUE, Géraldine**
**63040 Clermont-Ferrand**
**Cedex 9 (FR)**
• **BERRIOT, Julien**
**63040 Clermont-Ferrand**
**Cedex 9 (FR)**

(74) Mandataire: **Cohen, Sylvia**
**Manufacture Française des Pneumatiques MICHELIN**
**23, place des Carmes-Déchaux**
**DGD/PI - F35 - Ladoux**
**63040 Clermont-Ferrand Cedex 9 (FR)**

(56) Documents cités:
**FR-A1- 2 952 064     US-A- 3 700 621**

**Description**

L'invention concerne la préparation d'un mélange-maître d'élastomère diénique et de silice comprenant au moins une silice, un sel d'aluminium et un latex d'élastomère diénique, en particulier d'un latex de caoutchouc naturel. On entend par « mélange-maître » (couramment désigné par son nom anglais « masterbatch »): un composite à base d'élastomère dans lequel a été introduite une charge et éventuellement d'autres additifs.

La présente invention se rapporte en particulier à l'utilisation d'un tel mélange-maître pour la fabrication de compositions de caoutchoucs diéniques renforcées d'une charge inorganique, destinées à la fabrication de pneumatiques ou de produits semi-finis pour pneumatiques, en particulier de bandes de roulement de ces pneumatiques.

Pour obtenir les propriétés de renforcement optimales conférées par une charge dans une bande de roulement de pneumatique et ainsi une haute résistance à l'usure, on sait qu'il convient d'une manière générale que cette charge soit présente dans la matrice élastomérique sous une forme finale qui soit à la fois la plus finement divisée possible et répartie de la façon la plus homogène possible. Or, de telles conditions ne peuvent être réalisées que dans la mesure où cette charge présente une très bonne aptitude, d'une part à s'incorporer dans la matrice lors du mélange avec l'élastomère et à se désagglomérer, d'autre part à se disperser de façon homogène dans cette matrice.

De manière connue, le noir de carbone présente de telles aptitudes, ce qui n'est en général pas le cas des charges inorganiques, en particulier des silices. En effet, pour des raisons d'affinités réciproques, ces particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues; ces interactions tendent d'autre part à augmenter la consistance à l'état cru des compositions caoutchouteuses et donc à rendre leur mise en oeuvre ("processability") plus difficile qu'en présence de noir de carbone.

Depuis que les économies de carburant et la nécessité de protéger l'environnement sont devenues une priorité, il s'est avéré nécessaire de produire des pneumatiques ayant une résistance au roulement réduite sans pénalisation de leur résistance à l'usure.

Ceci a été rendu notamment possible grâce à l'emploi, dans les bandes de roulement de ces pneumatiques, de nouvelles compositions de caoutchouc renforcées de charges inorganiques, en particulier de silices spécifiques du type hautement dispersibles, capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant, ainsi qu'une adhérence améliorée sur sol mouillé, enneigé ou verglacé.

Des bandes de roulement chargées de telles silices hautement dispersibles (notées "HD" ou "HDS" pour "highly dispersible" ou "highly dispersible silica"), utilisables dans les pneumatiques à basse résistance au roulement parfois qualifiés de "Pneus Verts" pour l'économie d'énergie offerte à l'usager ("Green Tyre concept"), ont été abondamment décrites. On se reportera notamment aux demandes de brevet EP 501 227, EP 692 492, EP 692 493, EP 735 088, EP 767 206, EP 786 493, EP 881 252, WO99/02590, WO99/02601, WO99/02602, WO99/06480, WO00/0530 WO00/05301.

Ces documents de l'art antérieur enseignent l'utilisation de silices du type HD présentant une surface spécifique BET comprise entre 100 et 250 $m^2/g$. En pratique, une silice HD à haute surface spécifique faisant référence dans le domaine des "Pneus Verts" est en particulier la silice "Zeosil 1165 MP" (surface BET égale à environ 160 $m^2/g$) commercialisée par la société Rhodia. L'utilisation de cette silice "Zeosil 1165 MP" permet d'obtenir de bons compromis en matière de performance pneumatique, notamment une résistance à l'usure et une résistance au roulement satisfaisantes.

L'intérêt d'utiliser une silice à haute surface spécifique réside principalement dans la possibilité d'augmenter le nombre de liaisons de la silice avec l'élastomère et donc d'augmenter le niveau de renforcement de celui-ci. C'est pourquoi il apparaît avantageux d'utiliser dans des compositions de caoutchouc pour bandes de roulement de pneumatiques, des silices à haute surface spécifique, éventuellement supérieure à celle classiquement utilisée de l'ordre de 160 $m^2/g$, pour notamment améliorer la résistance à l'usure de ces bandes de roulement. Néanmoins, la dispersibilité de la charge et l'accroissement de sa surface spécifique sont considérés comme des caractéristiques antinomiques. En effet, une grande surface spécifique suppose une augmentation des interactions entre objets de charge, et donc une mauvaise dispersion de celle-ci dans la matrice élastomère ainsi qu'une mise en oeuvre malaisée.

Un autre type de solutions a été envisagé qui consiste, pour améliorer la dispersiblité de la charge dans la matrice élastomérique, à procéder au mélange de l'élastomère et de la charge en phase « liquide ». Pour ce faire, on a fait appel à un élastomère sous forme de latex qui se présente sous forme de particules d'élastomère dispersées dans l'eau, et à une dispersion aqueuse de la charge, c'est-à-dire une silice dispersée dans de l'eau, couramment appelée « slurry » de silice. Cependant la mise en contact du latex d'élastomère et du slurry ne permet pas (pas gênant pour la position du problème qui concerne la silice seulement) d'avoir une coagulation au sein du milieu liquide, coagulation qui devrait permettre d'obtenir un solide qui après séchage, aboutisse à l'obtention du mélange-maître d'élastomère et de silice souhaité.

En effet, les agrégats de silice sont typiquement hydrophiles dans la nature et ont une affinité avec l'eau, ainsi les agrégats de silice ont davantage d'affinité avec l'eau qu'avec les particules d'élastomère elles-mêmes.

Différentes solutions ont été proposées pour permettre néanmoins d'obtenir cette coagulation et une bonne dispersion de la charge dans la matrice élastomérique en phase « liquide » par l'utilisation combinée d'un agent permettant d'augmenter l'affinité entre l'élastomère et la silice, tel qu'un agent de couplage, et d'un agent permettant de réaliser la prise en masse, donc la coagulation, appelé agent de coagulation.

Ainsi par exemple le brevet US 5,763,388 propose l'incorporation de la silice dans le latex de caoutchouc en traitant la silice avec un agent de couplage, mélangeant la silice ainsi traitée en présence des agents de coagulation classiques. Le brevet FR 2952064 divulgue une méthode de préparation d'un mélange maître d'élastomère diénique et de silice. Le brevet EP1321488 se propose également de mettre en contact une dispersion aqueuse avec de la silice chargée négativement et un latex d'élastomère diénique, avec une émulsion contenant un agent de couplage polysulfide, en présence d'un agent de coagulation tel qu'une polyamine.

Le brevet EP1323775 propose encore la mise en contact d'une dispersion aqueuse contenant une charge inorganique telle qu'une silice avec un latex d'élastomère en présence d'un agent de coagulation qui peut être constitué selon la liste envisagée dans ce document par des chlorures de sodium ou de potassium, d'autres sels, des acides... Plus préférentiellement cette méthode décrit une étape supplémentaire permettant la formation in situ de la charge inorganique lors du mélangeage entre la dispersion aqueuse comprenant un précurseur susceptible de former la charge inorganique, avec le latex avant d'ajouter un agent de coagulation.

Les demanderesses ont découvert de façon surprenante une méthode simplifiée d'obtention d'un mélange-maître silice-élastomère préparé en phase « liquide » utilisant un sel spécifique dans une faible quantité déterminée, sans nécessité l'ajout d'autres additifs ou agents de coagulation. Cette méthode permet en particulier d'atteindre un très bon taux de rendement (supérieur à 80 %massique) en respectant le taux de charge préalablement introduit et avec une bonne dispersion de la charge dans la matrice élastomérique).

La méthode pour préparer un mélange-maître d'élastomère diénique et de silice, conforme à l'invention, comprend les étapes successives suivantes :

- préparer au moins une dispersion de silice dans de l'eau,
- mettre en contact et mélanger un latex d'élastomère et la dispersion aqueuse de silice en présence d'un sel d'aluminium, pour obtenir un coagulum,
- récupérer le coagulum,
- sécher le coagulum récupéré pour obtenir le mélange maître ;

le taux molaire en cations aluminium, défini comme le nombre de moles de cations aluminium du sel d'aluminium par unité de surface de silice (exprimé en $mol/m^2$), est compris entre $1,15*10^{-6}$ et $5*10^{-6}$ $mol/m^2$.

On notera en particulier que, de façon surprenante, de faibles quantités de sels d'aluminium entrant dans les plages précitées, en l'absence de dispersion de silice, ne permettent pas de réaliser une coagulation du latex d'élastomère diénique seul.

Avantageusement, le latex d'élastomère diénique est un latex de caoutchouc naturel, et en particulier un latex concentré de caoutchouc naturel.

Selon une caractéristique, la silice est une silice de précipitation.

Selon une autre caractéristique, la quantité de silice lors de la mise en contact de deux dispersions est comprise entre 20 pce et de 150 pce, parties pour cent parties en poids d'élastomère, de préférence entre 30 pce et de 100 pce, préférentiellement entre 30 pce et de 90 pce et encore plus préférentiellement 30 pce et 70 pce.

Selon un mode de réalisation de l'invention, le sel d'aluminium est préférentiellement choisi parmi les sulfates d'aluminium, les halogenures d'aluminium et les nitrates d'aluminium, les phosphates d'aluminium, les hydroxydes d'aluminium et plus préférentiellement encore le sel de d'aluminium est un sulfate d'aluminium.

L'invention a également pour objet un mélange-maître d'élastomère diénique et de silice, préparé selon la méthode qui comprend les étapes successives suivantes :

- préparer au moins une dispersion de silice dans de l'eau,
- mettre en contact et mélanger un latex d'élastomère et la dispersion aqueuse de silice en présence d'un sel d'aluminium,
- récupérer le coagulum,
- sécher le coagulum récupéré pour obtenir le mélange maître ;

le taux molaire en cations aluminium, défini comme le nombre de moles de cations aluminium du sel d'aluminium par unité de surface de silice (exprimé en $mol/m^2$), est compris entre $1,15*10^{-6}$ et $5*10^{-6}$ $mol/m^2$, de préférence entre $1,19*10^{-6}$ et $4,6*10^{-6}$ $mol/m^2$.

L'invention a encore pour objet une composition de caoutchouc à base d'au moins un mélange-maître tel que cité ci-dessus, ainsi qu'un article fini ou semi-fini, une bande de roulement de pneumatique ou un pneumatique ou produit semi-fini comportant au moins une telle composition de caoutchouc.

## I. - MESURES ET TESTS

I-1) Calcul du taux molaire de cations aluminium

Le taux molaire de cations aluminium est défini comme le nombre de moles de cations aluminium du sel d'aluminium par unité de surface de silice (exprimé en mol/$m^2$), l'unité de surface de silice étant défini comme la masse de silice considérée multipliée par la surface spécifique BET.
Ainsi pour une masse ml de sel métallique, ayant une masse molaire M1 et un nombre N d'atomes de métal par molécule de sel, ajouté à une masse m2 de silice (indifféremment du fait que la silice soit ou non déjà dispersée dans une solution aqueuse) ayant une surface spécifique mesurée par BET S2 (en $m^2/g$), le taux molaire de cations métalliques exprimé en mol/$m^2$ est égal à : $[(m1 / M1) * N] /(m2*S2)$.
La surface spécifique BET est déterminée selon la méthode de BRUNAUER - EMMET - TELLER décrite dans "The journal of the American Chemical Society", Vol. 60, page 309, février 1938 et correspondant à la norme NF T 45007.

I-2) Mesure du taux de charge par ATG

Ce mode opératoire a pour objet de quantifier les catégories de constituants des mélanges de caoutchouterie. On distingue 3 intervalles de température qui correspondent chacun à une catégorie de constituants :

- entre 250 et 550°C, correspondant aux matières organiques : élastomères, huiles, agents de vulcanisation...
- entre 550 et 750°C, correspondant à des pertes intermédiaires (matières charbonnées),
- au-delà de 750°C, correspondant aux cendres et produits minéraux : ZnO, silice éventuellement...

Il s'applique aussi bien aux mélanges crus qu'aux mélanges cuits.

a) - Appareillage

- Ensemble d'analyse thermogravimétrique sur un analyseur de marque METTLER TOLEDO : modèle TGA 851 ou TGA DSC1
- Balance au 1/100 mg marque et modèle de la balance
- Creusets alumine de 70$\mu$l (sans couvercle) Mettler Toledo réf 00024123
- Matériel divers de laboratoire : pinces, ciseaux....

b) - Principe

On suit les pertes de poids d'un échantillon de mélange soumis à une montée en température. Cette dernière se fait en 2 étapes :

1/ Chauffage de 25 à 550°C sous atmosphère inerte ($N_2$) pour évaporer les matières volatiles et réaliser la pyrolyse des matières organiques. La volatilité des produits qui en résultent entraîne une perte de poids correspondant dans un $1^{er}$ temps (avant 300°C) aux matières volatiles puis aux matières organiques présentes initialement dans le mélange.

2/ Poursuite du chauffage jusqu'à 750°C sous atmosphère oxydante (Air ou $O_2$) pour réaliser la combustion du noir (et/ou matières charbonnées). La volatilité des produits qui en résulte entraîne une perte de poids correspondant à la quantité initiale de noir (et /ou matières charbonnées).

Les produits qui subsistent après ces traitements constituent les cendres. Il s'agit généralement de matériaux inorganiques type ZnO, silice...

c) - <u>Mesures</u>

*c)-1- Préparation des échantillons*

La quantité de produit analysé doit être pesée à 0.01mg près et comprise entre 20 et 30 mg.

Elle est ensuite placée dans un creuset en alumine de 70 µl (sans couvercle)

*c)-2- Définition de la « méthode » (programme de température)*

- On définit successivement les segments suivants :

  - 1$^{er}$ segment : dynamique de 25 à 550°C à 50°C/min, sous azote (40 ml/min)
  - 2$^{ème}$ segment : dynamique de 550 à 750°C à 10°C/min, sous air (ou O2) (40 ml/min)

- On active le champ « soustraire courbe à blanc ».

Toute mesure est automatiquement corrigée d'une courbe à blanc. Cette dernière est réalisée dans les mêmes conditions que la mesure, avec creuset vide. Elle est mémorisée et utilisée pour toutes les mesures suivantes (pas de nouvel essai à blanc obligatoire avant chaque mesure).

*c)-3- Lancement de la mesure*

On s'assure au préalable, en consultant la fenêtre de contrôle du four, que les débits d'azote et d'air sont convenablement réglés (40µl/min). Sinon les ajuster à l'aide des réglages situés sur la « boite à gaz ».

- <u>Courbe à blanc</u>

On réalise la courbe à blanc en suivant la procédure décrite dans le manuel d'utilisation du TGA

- <u>Mesure</u>

On réalise la mesure en suivant la procédure décrite dans le manuel d'utilisation du TGA

*c)-4- Exploitation de la courbe*

En suivant les instructions du manuel d'utilisation du TGA

- on sélectionne et on ouvre la courbe à exploiter
- on délimite sur cette courbe le 1$^{er}$ palier, correspondant aux matières volatiles, entre respectivement 25 et environ 250°C.
- on calcule la perte de poids correspondant au taux de matières volatiles (en %)
- on délimite sur cette courbe le 2$^{ème}$ palier, correspondant aux matières organiques, entre respectivement la température du 1$^{er}$ palier environ 250°C et 550°C.
- on calcule la perte de poids correspondant au taux de matières organiques (en %)
- on délimite sur cette courbe le 3$^{ème}$ palier, correspondant aux pertes, entre respectivement 550 et 750°C
- on calcule la perte de poids correspondant à ces pertes (en %)
- on calcule le résidu ou taux de cendres en %

*c)-5- Présence de composés volatiles*

Pour certains mélanges contenant des composés volatiles qui peuvent s'évaporer à température ambiante, il y a un risque de pertes de matière entre la préparation de l'échantillon et le départ effectif de la mesure. Ces pertes ne sont pas prises en compte par l'appareil.

Pour prendre en compte ces pertes et avoir la composition réelle du mélange, on peut procéder de la façon suivante :

On réalise les étapes c)-1 à c)-3 précédemment décrites avec les 2 consignes suivantes:

- lors de la préparation de l'échantillon : noter le poids du creuset vide (P0) et le poids de l'échantillon P1
- lors du lancement de la mesure : renseigner le champ "poids de creuset" par P0 et le champ "poids d'échantillon" par P1

Pour l'exploitation (étape c)-4), le TGA prend en compte, pour déterminer les pertes, la masse de l'échantillon P2 qu'il calcul au départ effectif de la mesure à partir du poids du creuset, ce qui est primordial pour le calcul du résidu ; P2 est calculé par le TGA en prenant en compte la masse P3 (Creuset + échantillon) à au temps T0 - P0.
Le calcul des taux des différents constituants et du résidu est réalisé par rapport au poids d'échantillon P1 défini lors de la préparation et non par rapport à P2.

Le taux de matières volatiles alors calculé par l'appareil est erroné puisqu'une partie de MV, matières volatiles, (P1 - P2) s'est évaporée lors de l'attente entre la préparation et le début effectif de la mesure.
Les MV doivent donc être recalculées manuellement :

- en masse

$$MV\ mg = (P1 - P2)\ mg + pertes\ 1^{er}\ palier\ mg$$

- en taux

$$Tx\ MV\ \% = MV\ mg\ /\ P1\ *\ 100\ \ ou\ \ 100 - résidu\ 1^{er}\ palier\ \%.$$

*c)-6- Taux de charge en pcmo*

Ce taux est exprimé en pcmo, pourcentage de matière organique et obtenu par le calcul, lorsque l'on interprète la mesure d'ATG avec la formule suivante :

$$Tx\ charge\ (pcmo) = [(D)\ /\ (B + C)]\ *\ 100$$

Dans laquelle B représente le pourcentage de matière organiques (intervalle entre 250 et 550°C), C le pourcentage de pertes intermédiaires (entre 550 et 750°C) et D le pourcentage de résidu (au-delà de 750°C).

I-3) Mesure du rendement de coagulation

Le rendement de coagulation correspond au rapport de la masse sèche récupérée (de laquelle a été ôtée la masse de matières volatiles résiduelles après séchage telle qu'elle est définie dans le protocole de mesure de l'ATG dans les paragraphes précédents) sur la masse visée au départ, multiplié par cent.

**II. DESCRIPTION DETAILLEE DE L'INVENTION**

La méthode pour préparer un mélange-maître d'élastomère diénique et de silice selon l'invention comprend les étapes successives suivantes :

- préparer au moins une dispersion de silice dans de l'eau,
- mettre en contact et mélanger un latex de d'élastomère et la dispersion aqueuse de silice en présence d'un sel d'aluminium, pour obtenir un coagulum,
- récupérer le coagulum,
- sécher le coagulum récupéré pour obtenir le mélange maître ;

le taux molaire en cations aluminium, défini comme le nombre de moles de cations aluminium du sel d'aluminium par unité de surface de silice (exprimé en mol/m$^2$), est compris entre $1,15*10^{-6}$ et $5*10^{-6}$ mol/m$^2$, de préférence entre $1,19*10^{-6}$ et $4,6*10^{-6}$ mol/m$^2$.

II-1) Préparation de la dispersion aqueuse de silice

Pour l'invention peut être utilisée toute silice ($SiO_2$) connue de l'homme du métier, notamment toute silice de précipitation ou de pyrogénation présentant une surface BET ainsi qu'une surface spécifique CTAB toutes deux inférieures à 450 $m^2$/g, de préférence de 30 à 400 $m^2$/g.

On peut notamment, utiliser des silices hautement spécifiques (dites "HDS"), on citera par exemple les silices Ultrasil 7000 et Ultrasil 7005 de la société Degussa, les silices Zeosil 1165MP, 1135MP et 1115MP de la société Rhodia, la silice Hi-Sil EZ150G de la société PPG, les silices Zeopol 8715, 8745 et 8755 de la Société Huber, les silices à haute surface spécifique telles que décrites dans la demande WO 03/16837.

La silice est ensuite dispersée dans de l'eau, de préférence de sorte à obtenir une dispersion dont la viscosité est suffisante pour être aisément « manipulable ». Préférentiellement la concentration massique de silice dans la dispersion est comprise entre 0,1 et 30 %. On pourra par exemple réaliser une dispersion aqueuse de silice avec un taux de silice dans l'eau de 4% en poids

Avantageusement, la dispersion est cisaillée par sonification afin de permettre d'obtenir une stabilité des agrégats dans l'eau, ce qui permet d'améliorer la dispersion de la silice dans le mélange maître ensuite réalisé.

Cette sonification peut notamment être réalisée à l'aide d'un générateur Vibracell fabriqué par SONICS et Materials Inc de 1500 Watts avec un convertisseur piezoélectrique avec cristal PZT (référence 75010), un booster pour la sonde et une sonde en alliage titane de diamètre 19mm (pour une hauteur de 127mm).

Selon un mode de réalisation de l'invention, on ajoute ensuite le sel d'aluminium et l'ensemble est agité à l'aide d'une spatule. On notera que l'on peut avantageusement ajouter le sel d'aluminium à la dispersion aqueuse de silice avant l'étape de sonification afin notamment d'améliorer la solubilisation du sel dans la dispersion aqueuse réalisée.

II-2) Sel d'aluminium

Conviennent particulièrement les sels d'aluminium choisis parmi les sulfates d'aluminium, les halogénures d'aluminium et en particulier les chlorures, les bromures, les fluorures et les iodures, les nitrates d'aluminium, les phosphates d'aluminium et les hydroxydes d'aluminium et plus préférentiellement encore le sel d'aluminium choisi est un sulfate d'aluminium.

Il est clair que l'on peut envisager d'utiliser un coupage des différents sels d'aluminium précités.

II-3) Latex d'élastomère diénique

Comme dit précédemment, le latex d'élastomère est une forme particulière de l'élastomère qui se présente sous forme de particules d'élastomère dispersées dans l'eau.

L'invention concerne les latex d'élastomères diéniques, les élastomères diéniques étant définis comme suit:

Par élastomère ou caoutchouc "diénique", doit être compris de manière connue un élastomère issu au moins en partie (i.e., un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Parmi ces élastomères diéniques, on distingue par ailleurs le caoutchouc naturel et les élastomères synthétiques.

Pour le caoutchouc naturel (NR) qui convient particulièrement à l'invention, ce caoutchouc naturel existe sous différentes formes comme le détail le chapitre 3 « Latex concentrates : properties and composition », de K.F. Gaseley, A.D.T. Gordon et T.D. Pendle dans « Naturel Rubber Science and Technology », A.D. Roberts, Oxford University Press - 1988.

En particulier plusieurs formes de latex de caoutchouc naturel sont commercialisés : les latex de caoutchouc naturel dits « de champ » (« latex field »), les latex de caoutchouc naturel dits « concentrés » (« concentrated natural rubber latex »), les latex epoxydés (« ENR »), les latex déprotéinisés ou encore les latex prévulcanisés. Le latex de caoutchouc naturel de champ est un latex dans lequel de l'ammoniac a été ajouté pour éviter une coagulation précoce et le latex de caoutchouc naturel concentré correspond à un latex de champ qui a subi un traitement correspondant à un lavage suivi d'une concentration. Les différentes catégories de latex de caoutchouc naturel concentrés sont répertoriées notamment selon la norme ASTM D 1076-06. Parmi ces latex de caoutchouc naturel concentrés, on distingue notamment des latex de caoutchouc naturel concentrés de qualité dite: « HA » (high ammonia) et de qualité dite « LA » ; on utilisera avantageusement pour l'invention des latex de caoutchouc naturel concentrés de qualité HA.

Le latex peut être utilisé directement ou être préalablement dilué dans de l'eau pour faciliter sa mise en oeuvre.

Par élastomères diéniques synthétiques susceptible d'être utilisé conformément à l'invention, on entend plus particulièrement par élastomère diénique:

(a) - tout homopolymère obtenu par polymérisation d'un monomère diène conjugué ayant de 4 à 12 atomes de carbone;

(b) - tout copolymère obtenu par copolymérisation d'un ou plusieurs diènes conjugués entre eux ou avec un ou plusieurs composés vinyle aromatique ayant de 8 à 20 atomes de carbone;

(c) - un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) - un copolymère d'isobutène et d'isoprène (caoutchouc butyle), ainsi que les versions halogénées, en particulier chlorées ou bromées, de ce type de copolymère.

A titre de diènes conjugués conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatique conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778 ou US 6 013 718, et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909 ou US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre - 5 C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre - 5°C et - 70°C.

En résumé, le ou les élastomères diéniques synthétiques selon l'invention sont choisis préférentiellement dans le groupe des élastomères diéniques fortement insaturés constitué par les polybutadiènes (en abrégé "BR"), les polyisoprènes (IR) de synthèse, les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Ainsi à tire de latex d'élastomère synthétique, le latex peut notamment consister en un élastomère diénique synthétique déjà disponible sous forme d'émulsion (par exemple un copolymère de butadiène et de styrène, SBR, préparé en émulsion), ou en un élastomère diénique synthétique initialement en solution (par exemple un SBR préparé en solution) qui est émulsifié dans un mélange de solvant organique et d'eau, généralement au moyen d'un agent tensio-actif.

Convient particulièrement à l'invention un latex de SBR, notamment un SBR préparé en émulsion ("ESBR") ou un SBR préparé en solution ("SSBR"), et plus particulièrement un SBR préparé en émulsion.
Il existe deux grands types de procédés de copolymerisation en émulsion du styrène et de butadiène, l'un d'entre eux, ou procédé à chaud (mis en oeuvre à une température proche de 50° C), étant adapté pour la préparation de SBR très ramifiés alors que l'autre, ou procédé à froid (mis en oeuvre à une température pouvant aller de 15° C à 40° C), permet d'obtenir des SBR plus linéaires.
Pour une description détaillée de l'efficacité de plusieurs émulsifiants utilisables dans ledit procédé à chaud (en fonction des taux desdits émulsifiants), on pourra par exemple se reporter aux deux articles de C. W. Carr, 1. M. Kolthoff, E. J. Meehan, University of Minesota, Minneapolis, Minesota qui ont paru dans Journal of Polymer Science de 1950, Vol. V, n°2, pp. 201-206, et de 1951, Vol. VI, n° 1, pp. 73-81.
Concernant des exemples comparatifs de mise en oeuvre dudit procédé à froid, on pourra par exemple se reporter à l'article ½ Industrial and Engineering Chemistry, 1948, Vol. 40, n° 5, pp. 932-937, E. J. Vandenberg, G. E. Hulse, Hercules Powder Company, Wilmington, Delaware + et a l'article ½ Industrial and Engineering Chemistry, 1954, Vol. 46, n° 5, pp. 1065-1073, J. R. Miller, H. E. Diem, B. F. Goodrich Chemical Co., Akron, Ohio +.

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

On notera que l'on peut envisager d'utiliser un ou plusieurs latex de caoutchouc naturel en coupage, un ou plusieurs latex de caoutchouc synthétique en coupage ou un coupage un ou plusieurs latex de caoutchouc naturel avec un ou plusieurs latex de caoutchouc synthétique.

<u>II-4) Mise en contact des deux dispersions</u>

Les deux dispersions sont mises en contact en présence d'un sel d'aluminium.
Avantageusement le sel est ajouté à la dispersion aqueuse de silice comme cela a été expliqué précédemment c'est-à-dire lors de la formation de la dispersion aqueuse de silice ou après sa formation. Cependant on pourrait également envisager d'ajouter le sel d'aluminium lors de la mise en contact de la dispersion aqueuse de silice et du latex d'élastomère. Dans ce dernier cas, on peut avantageusement introduire le sel sous forme d'une solution saline.

Pour permettre le bon mélange de ces solutions, celles-ci sont par exemple versées dans un bécher sous agitation magnétique.
On peut également utiliser tout type d'appareil permettant un mélange « efficace » de deux produits en phase liquide, ainsi on pourra utiliser un mélangeur statique tel que des mélangeurs statiques commercialisés par les sociétés Noritake Co., Limited, TAH aux USA, KOFLO aux USA, ou TOKUSHU KIKA KOGYO Co., Ltd. ou un mélangeur réalisant un haut cisaillement tel que des mélangeurs commercialisés par TOKUSHU KIKA KOGYO Co., Ltd., ou par la société PUC en Allemagne, par la société CAVITRON en Allemagne ou par la société SILVERSON au Royaume Uni.
Il est clair que plus l'étape de mélange est efficace, meilleure est la dispersion et l'homogénéité du mélange maître silice-élastomère diénique.
Lors de cette phase de mélange des deux dispersions, un coagulum d'élastomère et de silice se forme soit sous forme d'un seul élément solide dans la solution, soit sous forme de plusieurs éléments solides séparés.

De façon surprenante, on a constaté que pour obtenir effectivement un coagulum, avec un rendement de coagulation supérieur ou égal à 80 % et qui corresponde à l'obtention d'un mélange maître respectant le ratio initial en poids de charge par rapport à l'élastomère, un écart de 20% par rapport au ratio calculé initialement étant considéré comme acceptable, le taux molaire en cations aluminium, défini comme le nombre de moles de cations aluminium du sel d'aluminium par unité de surface de silice (exprimé en mol/m$^2$), doit être compris entre $1,15*10^{-6}$ et $5*10^{-6}$ mol/m$^2$.

Les volumes des deux dispersions à mettre en contact et en particulier le volume de dispersion de silice dépend du taux de silice visé pour le mélange-maître à réaliser, en tenant compte bien sur des concentrations respectives des dispersions. Ainsi le volume sera adapté en conséquence. Avantageusement le taux de silice visé pour le mélange maître est compris entre 20 et 150 pce (parties en poids pour cent parties d'élastomère), de préférence entre 30 à 100 pce et plus préférentiellement entre 30 et 90 pce, encore plus préférentiellement entre 30 et 70 pce.

II-5) Récupération du solide formé.

Le ou les solides récupérés sont filtrés ou centrifugés. En effet, l'opération de filtrage qui peut être réalisée à l'aide d'un tamis ou toile de filtration, peut s'avérer inadaptée lorsque le coagulum se présente sous forme de nombreux et petits éléments solides. Dans un tel cas, on réalise de préférence une opération de centrifugation supplémentaire. A l'issue de cette étape de filtrage ou de centrifugation, le coagulum obtenu est séché, par exemple à l'étuve.

A l'issue de l'étape de séchage, le coagulum sec obtenu peut avantageusement être homogénéisé afin d'assurer la représentativité du prélèvement pour la mesure de taux de charge, par exemple en réalisant un travail mécanique léger sur outil à cylindre.

A l'issue de cette opération, on procède à la mesure du taux de charge par ATG et le rendement de coagulation.

II-6) Composition de caoutchouc

Avantageusement les mélanges maîtres ainsi réalisés sont susceptibles d'être utilisés dans des compositions de caoutchouc, notamment pour pneumatique.

Les compositions de caoutchouc pour pneumatique à base des mélanges maîtres selon l'invention, peuvent comporter également de façon connue un agent de couplage et un système de vulcanisation.

On rappelle ici que par "agent de couplage" on entend, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-Z-X", dans laquelle:

- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- Z représente un groupe divalent permettant de relier Y et X.

Des agents de couplage, notamment silice/ élastomère diénique ont été décrits dans un très grand nombre de documents, les plus connus étant des organosilanes bifonctionnels porteurs de fonctions alkoxyle (c'est-à-dire, par définition, des "alkoxysilanes") à titre de fonctions "Y" et, à titre de fonctions "X", de fonctions capables de réagir avec l'élastomère diénique telles que par exemple des fonctions polysulfure.

Parmi les composés alkoxysilane-polysulfure connus, doit être particulièrement cité le tétrasulfure de bis 3-triéthoxysilylpropyle (en abrégé "TESPT"), de formule $[(C_2H_5O)_3Si(CH_2)_3S_2]_2$, commercialisé notamment par la société Degussa sous la dénomination "Si69" (ou "X50S" lorsqu'il est supporté à 50% en poids sur du noir de carbone), sous la forme d'un mélange commercial de polysulfures $S_x$ avec une valeur moyenne pour x qui est proche de 4.

On notera qu'on peut envisager l'introduction de l'agent de couplage dans la préparation du mélange maître afin d'obtenir directement un mélange maître d'élastomère et de silice comportant également un agent de couplage. L'agent de couplage peut ainsi être ajouté avant ou lors de la mise en contact de la dispersion aqueuse de silice et du latex d'élastomère diénique

Ces compositions de caoutchouc conformes à l'invention peuvent comporter également tout ou partie des additifs usuels habituellement utilisés dans les compositions d'élastomères destinées à la fabrication de pneumatiques, en particulier de bandes de roulement, comme par exemple des plastifiants ou des huiles d'extension, que ces derniers soient de nature aromatique ou non-aromatique, des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxyde et/ou de bismaléimides, des accélérateurs de vulcanisation.

De préférence, ces compositions comportent, à titre d'agent plastifiant préférentiel non aromatique ou très faiblement aromatique, au moins un composé choisi dans le groupe constitué par les huiles naphténiques, paraffiniques, huiles MES, huiles TDAE, les esters (en particulier trioléates) de glycérol, les résines plastifiantes hydrocarbonées présentant une haute Tg de préférence supérieure à 30°C, et les mélanges de tels composés.

Ces compositions peuvent également contenir, en complément des agents de couplage, des activateurs de couplage, des agents de recouvrement (comportant par exemple la seule fonction Y) de la charge inorganique renforçante ou plus généralement des agents d'aide à la mise en oeuvre susceptibles de manière connue, grâce à une amélioration de la dispersion de la charge inorganique dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des $\alpha,\omega$-dihydroxy-polyorganosiloxanes (notamment des $\alpha,\omega$-dihydroxy-polydiméthylsiloxanes), des acides gras comme par exemple l'acide stéarique.

On pourrait également envisager d'incorporer au mélange maître avant la formation du coagulum les additifs décrits précédemment, huile, anti-oxydant, agent de recouvrement...

II-7). Fabrication des compositions de caoutchouc

Les compositions de caoutchouc de l'invention sont fabriquées dans des mélangeurs appropriés, en utilisant deux phases de préparation successives selon une procédure générale bien connue de l'homme du métier : une première phase de travail ou malaxage thermo-mécanique (parfois qualifiée de phase "non-productive") à haute température, jusqu'à une température maximale comprise entre 130°C et 200°C, de préférence entre 145°C et 185°C, suivie d'une seconde phase de travail mécanique (parfois qualifiée de phase "productive") à plus basse température, typiquement inférieure à 120°C, par exemple entre 60°C et 100°C, phase de finition au cours de laquelle est incorporé le système de réticulation ou vulcanisation.

Selon un mode de réalisation préférentiel l'invention, de tous les constituants de base des compositions de l'invention, à l'exception du système de vulcanisation, à savoir le mélange-maître, l'agent de couplage (s'il n'est pas déjà présent dans le mélange-maître) et le noir de carbone le cas échéant, sont incorporés de manière intime, par malaxage, à l'élastomère diénique au cours de la première phase dite non-productive, c'est-à-dire que l'on introduit dans le mélangeur et que l'on malaxe thermomécaniquement, en une ou plusieurs étapes, au moins ces différents constituants de base jusqu'à atteindre la température maximale comprise entre 130°C et 200°C, de préférence comprise entre 145°C et 185°C.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de recouvrement ou de mise en oeuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le système de vulcanisation à basse température, généralement dans un mélangeur externe tel qu'un mélangeur à cylindres; le tout est alors mélangé (phase productive) pendant quelques minutes, par exemple entre 2 et 15 min.

Lorsqu'un agent de recouvrement est utilisé, son incorporation peut être réalisée en totalité pendant la phase non-productive, en même temps que la charge inorganique, ou bien en totalité pendant la phase productive, en même temps que le système de vulcanisation, ou encore fractionnée sur les deux phases successives.

Il convient de noter qu'il est possible d'introduire tout ou partie de l'agent de recouvrement sous une forme supportée (la mise sur support étant réalisée au préalable) sur un solide compatible avec les structures chimiques correspondant à ce composé. Par exemple, lors du fractionnement entre les deux phases successives ci-dessus, il peut être avantageux d'introduire la seconde partie de l'agent de recouvrement, sur le mélangeur externe, après une mise sur support afin de faciliter son incorporation et sa dispersion.

Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

La composition finale ainsi obtenue est ensuite calandrée par exemple sous la forme d'une feuille ou d'une plaque, notamment pour une caractérisation au laboratoire, ou encore extrudée sous la forme d'un profilé de caoutchouc utilisable par exemple comme une bande de roulement de pneumatique pour véhicule tourisme.

### III EXEMPLES DE REALISATION DE L'INVENTION

III. 1 Préparation des mélanges- maîtres

MATERIEL

- préparation de la dispersion aqueuse de silice
- Thermobalance type HR73 Halogen Moisture Analyser de marque Mettler Toledo (vérification du taux de matière volatile de la silice)
- Balance type PG5002-S Delta Range® (max 5100g précision de 0.1/0.01g) de marque Mettler Toledo (pesées silice + eau)
- Bécher verre forme basse de 100mL
- Balance type AG204 (max 210g précision de 0.1mg) de marque Mettler Toledo (pour la pesée du sel)
- Générateur d'ultrasons Vibracell fabriqué par SONICS et Materials Inc de 1500 Watts (ref : VC1500, 20kHz), avec un convertisseur piezoélectrique avec cristal PZT (référence CV154), un booster pour la sonde (réf BHN15GD, amplitude augmentée de 50%) et une sonde non filetée standard (non « high gain ») en alliage titane de diamètre 19mm (pour une hauteur de 127mm)
- Agitateur magnétique type MR3003 de marque Heidolph
- Barreau aimanté droit de 25mm de long et de 8mm de diamètre

- préparation du latex

- Thermobalance type HR73 Halogen Moisture Analyser de marque Mettler Toledo (vérification du taux de matière volatile du latex)
- Balance type PG5002-S Delta Range® (max 5100g précision de 0.01g) de marque Mettler Toledo (pesées latex + eau)
- Bécher verre forme basse de 250mL

- mise en contact

- Agitateur magnétique type MR3003 de marque Heidolph
- Barreau aimanté droit de 25mm de long et de 8mm de diamètre

- récupération

- Centrifugeuse type 4K15, de marque Sigma Laboratory Centrifuges Bioblock Scientific, équipé d'un rotor Sigma de référence N°12256 (max 6 x 400g)
- Flacon Nalgène® de 250mL

REACTIFS

- *silice* : silice de précipitation 160MP (ZEOSIL 1165MP), fabriquée par Rhodia, de surface spécifique BET mesurée à 160m$^2$/g, de densité réelle de 2.14g/cm$^3$, avec un taux de fonctions silanols « de surface » (mesuré par greffage Me(OH)) de 7.4 OH/nm$^2$ et un taux de fonctions silanols « total » (mesuré par ATG) de 12 OH/nm$^2$
- *sel* : sulfate d'aluminium (Al$_2$(SO$_4$)$^3$, 18H$_2$O) pureté supérieure ou égale à 98.0%w, qualité ACS Reagent, CAS [7784-31-8], référence 227617-500G, commercialisé par la société Aldrich

- *latex* : latex de caoutchouc naturel qualité HA, commercialisé par la société TRANG Latex / Beetex (Thaïlande), ayant un extrait sec mesuré à 61, 12 %, pH d'environ 10.65, contenant environ 20-25ppm de Mg2+
- *eau* : eau ultrapure (18.2 MΩ.cm)

MODE OPERATOIRE

→ Préparation d'un mélange maître de 10.5g théorique

Pour les exemples on a choisi une quantité de silice de 50 parties en poids pour cent parties d'élastomère qui correspond ici à 50 pcmo (en effet les mélanges maîtres décrits ici ne comprennent que la silice et l'élastomère diénique).

- préparation de la dispersion aqueuse de silice (4% en poids)

On pèse de 3.5g équivalents secs de silice et on additionne environ 84g d'eau ultrapure. Bien entendu il faut prendre en compte la quantité d'eau adsorbée présente dans la silice, ainsi par exemple 3.5g équivalent sec de silice à 6.36%w en matière volatile = 3.74g de silice à peser et les 84g d'eau pour obtenir un slurry à 4%w deviennent 84-(3.74-3.5) =83.76g

On pèse la quantité de sulfate d'aluminium que l'on introduit dans la suspension aqueuse de silice (mise en contact au moins 10minutes)

On sonifie la suspension de [silice + eau + sel] à 60% de la puissance maximum du générateur d'ultrasons, pendant 8minutes, le Becher de 100mL étant maintenu a température fixe en étant plongé dans un bain de glace.

La dispersion ainsi obtenue juste sonifiée est ensuite maintenue sous agitation magnétique (500tr/min) jusqu'à la mise en contact.

- préparation du latex (30%w)

On pèse le latex et on ajuste sa concentration (dilution par ajout d'eau ultrapure).

- mise en contact

On verse la dispersion précédemment obtenue [silice+eau +sel] dans le latex sous agitation magnétique (500tr/min)

On agite l'ensemble à 500tr/min pendant 3minutes

- récupération

Afin d'avoir pour les différents essais des conditions identiques du mode opératoire, le coagulum formé ou les solides formés (couramment appelés « crumbs ») sont centrifugés, y compris dans les cas où l'aspect visuel du coagulum permettait d'envisager une opération de filtrage.

La centrifugation est réalisée, après transfert dans un flacon en nalgène de 250mL, à l'aide d'une centrifugeuse à godets Sigma 4K15 à 8000 tour/min pendant 10 minutes.

Le coagulum (sous forme d'un culot) ainsi récupéré est séché sous sorbonne à température ambiante pendant 24 heures puis sous vide en étuve pendant 24h à 65°C sous 100 à 300mbar, afin d'éliminer les dernières traces d'eau.

On procède alors à la mesure du taux de charge par ATG et du rendement de coagulation sur le mélange maître ainsi réalisé. Avantageusement, on peut procéder à un léger travail mécanique, tel que sur un outil à cylindre, afin d'homogénéiser le coagulum et assurer la représentativité de l'échantillonnage de la mesure. Il est également possible de réaliser plusieurs mesures d'ATG sur le coagulum (par exemple 10 mesures) afin d'en faire la moyenne pour avoir une valeur représentative de l'ensemble du coagulum.

III-2 Exemple

Cet exemple a pour but de mettre en évidence le bon fonctionnement de la méthode conforme à l'invention, en particulier vis-à-vis taux molaire en cations aluminium. Le sel d'aluminium utilisé dans cet exemple étant un sulfate d'aluminium $Al_2(SO_4)^3$, $18H_2O$ tel que précisé dans le paragraphe III-1.

Les essais E1, E2, E3 et E4 ont été réalisés conformément au procédé détaillé dans le paragraphe précédent avec :

- un latex concentré de caoutchouc naturel « High Ammonia » provenant du fournisseur TRANG Latex / BEETEX ayant un extrait sec mesuré à 61, 12 %, tel que précisé dans le paragraphe III-1, et qui a été dilué par 2
- une quantité de silice lors de la mise en contact des deux dispersions de 50 pce.

La seule différence entre ces quatre essais consiste, lors du procédé opératoire détaillé précédemment, en la quantité de cations aluminium introduits lors de l'ajout de sel d'aluminium à la dispersion aqueuse de silice.

Ainsi les essais E1, E2, E3 et E4 se distinguent les uns des autres comme suit:

- pour E1, le taux molaire en cations aluminium est de $1,15 * 10^{-6}$ (correspondant à une masse de sulfate d'aluminium hydraté de 0,221g pour un mélange maître visé de 10.5g, à 50 parties en poids pour cent parties d'élastomère visés)
- pour E2, le taux molaire en cations aluminium est de $2,32 * 10^{-6}$ (correspondant à une masse de sulfate d'aluminium hydraté de 0,441g)
- pour E3, le taux molaire en cations aluminium est de $4,63 * 10^{-6}$ (correspondant à une masse de sulfate d'aluminium hydraté de 0,882g)

pour E4, le taux molaire en cations aluminium est de $5,79 * 10^{-6}$ (correspondant à une masse de sulfate d'aluminium hydraté de 1,103g).

Les résultats obtenus (rendement et taux de charge) pour ces quatre essais sont présentés dans le tableau 1 qui suit :

Tableau 1

| Essais | Rendement (% en poids) | Taux de charge (pcmo) |
|--------|------------------------|------------------------|
| E1 | - | - |
| E2 | 97 | 50,0 |
| E3 | 96,1 | 50,4 |
| E4 | 79 | 34,3 |

On constate que l'essai E1 non-conforme à l'invention, n'a pas permis la coagulation de l'élastomère avec la silice. Il s'est produit une démixion de la silice et du latex lors de l'étape de récupération par centrifugation, aucun coagulum n'a donc été obtenu.

Pour les essais E2 et E3 conformes à l'invention, on obtient à la fois des taux de silice acceptables (compris entre 40 pcmo et 60 pcmo) et un rendement supérieur à 80%.

Pour l'essai E4 non-conforme à l'invention, on constate que même si un mélange maître a été obtenu, le rendement est à la limite de la frontière acceptable et surtout le taux de silice (34,3 pcmo) est en dehors des taux acceptables.

Il apparaît clairement qu'il est important d'être dans un domaine de taux molaire en cations aluminium donné pour répondre aux critères souhaités en terme de taux de charge respecté et de rendement obtenu.

**Revendications**

1. Méthode pour préparer un mélange-maître d'élastomère diénique et de silice comprenant les étapes successives suivantes :

   - préparer au moins une dispersion de silice dans de l'eau,
   - mettre en contact et mélanger un latex d'élastomère et la dispersion aqueuse de silice en présence d'un sel d'aluminium, pour obtenir un coagulum,
   - récupérer le coagulum,
   - sécher le coagulum récupéré pour obtenir le mélange maîtres;

   le taux molaire en cations aluminium, défini comme le nombre de moles de cations aluminium du sel d'aluminium par unité de surface de silice, définie comme la masse de silice considérée multipliée par la surface spécifique BET, est compris entre $1,15*10^{-6}$ et $5* 10^{-6}$ mol/m$^2$, le taux molaire en cations aluminium étant calculé conformément à la description.

**2.** Méthode selon la revendication 1, dans laquelle le taux molaire en cations aluminium est compris entre $1,19*10^{-6}$ et $4,6*10^{-6}$ mol/m$^2$.

**3.** Méthode selon l'une quelconque des revendications 1 ou 2, dans laquelle le sel d'aluminium au moins divalent est ajouté à la dispersion aqueuse de silice avant la mise en contact avec le latex d'élastomère.

**4.** Méthode selon l'une quelconque des revendications 1 à 3, dans laquelle l'étape de récupération du coagulum est réalisée par une opération de filtrage ou de centrifugation.

**5.** Méthode selon l'une quelconque des revendications 1 à 4, dans laquelle le latex d'élastomère diénique est un latex de caoutchouc naturel.

**6.** Méthode selon la revendication 5, dans laquelle le latex de caoutchouc naturel est un latex concentré de caoutchouc naturel.

**7.** Méthode selon l'une quelconque des revendications 1 à 6, dans laquelle la silice est une silice de précipitation.

**8.** Méthode selon l'une quelconque des revendications 1 à 7, dans laquelle la quantité de silice lors de la mise en contact de deux dispersions est comprise entre 20 pce et 150 pce, parties pour cent parties en poids d'élastomère, de préférence entre 30 pce et 100 pce.

**9.** Méthode selon l'une quelconque des revendications précédentes, dans laquelle le sel d'aluminium est choisi parmi les sulfates d'aluminium, les halogénures d'aluminium et les nitrates d'aluminium.

**10.** Méthode selon la revendication 9, dans laquelle le sel d'aluminium est un sulfate d'aluminium.

**11.** Méthode selon l'une quelconque des revendications précédentes, dans laquelle une dispersion aqueuse d'agent de couplage est ajoutée avant ou lors de la mise en contact de la dispersion aqueuse de silice et du latex d'élastomère diénique.

**12.** Mélange-maître d'élastomère diénique et de silice préparé selon l'une quelconque des revendications 1 à 11.

**13.** Composition de caoutchouc à base d'au moins un mélange-maître selon la revendication 12.

**14.** Bande de roulement de pneumatique comportant une composition selon la revendication 13.

**15.** Pneumatique ou produit semi-fini comportant au moins une composition de caoutchouc selon la revendication 13.

**Patentansprüche**

**1.** Verfahren zur Herstellung eines Masterbatch aus Dienelastomer und Siliciumdioxid, das die folgenden aufeinanderfolgenden Schritte umfasst:

- Herstellen von mindestens einer Dispersion von Siliciumdioxid in Wasser,
- Inkontaktbringen und Mischen eines Elastomer-latex und der wässrigen Siliciumdioxiddispersion in Gegenwart eines Aluminiumsalzes zum Erhalt eines Koagulats,
- Gewinnen des Koagulats,
- Trocknen des gewonnenen Koagulats zum Erhalt des Masterbatch;

wobei der molare Gehalt an Aluminiumkationen, der definiert ist als die Zahl der Mole von Aluminiumkationen des Aluminiumsalzes pro Oberflächeneinheit des Siliciumdioxids, die definiert ist als die Masse des betrachteten Siliciumdioxids multipliziert mit der spezifischen BET-Oberfläche, zwischen $1,15 \times 10^{-6}$ und $5 \times 10^{-6}$ mol/m$^2$ liegt, wobei der molare Gehalt an Aluminiumkationen gemäß der Beschreibung berechnet wird.

**2.** Verfahren nach Anspruch 1, bei dem der molare Gehalt an Aluminiumkationen zwischen $1,19 \times 10^{-6}$ und $4,6 \times 10^{-6}$ mol/m$^2$ liegt.

3. Verfahren nach einem der Ansprüche 1 und 2, bei dem das mindestens zweiwertige Aluminiumsalz vor dem Inkontaktbringen mit dem Elastomerlatex zu der wässrigen Siliciumdioxiddispersion gegeben wird.

4. Verfahren nach einem der Ansprüche 1 bis 3, bei dem der Schritt der Gewinnung des Koagulats durch einen Filtrations- oder Zentrifugationsarbeitsgang durchgeführt wird.

5. Verfahren nach einem der Ansprüche 1 bis 4, bei dem es sich bei dem Dienelastomerlatex um einen Naturkautschuklatex handelt.

6. Verfahren nach Anspruch 5, bei dem es sich bei dem Naturkautschuklatex um einen konzentrierten Naturkautschuklatex handelt.

7. Verfahren nach einem der Ansprüche 1 bis 6, bei dem es sich bei dem Siliciumdioxid um ein gefälltes Siliciumdioxid handelt.

8. Verfahren nach einem der Ansprüche 1 bis 7, bei dem die Menge an Siliciumdioxid während des Inkontaktbringens der beiden Dispersionen zwischen 20 phe und 150 phe, Teile pro 100 Teile Elastomer, vorzugsweise zwischen 30 phe und 100 phe, liegt.

9. Verfahren nach einem der vorhergehenden Ansprüche, bei dem das Aluminiumsalz aus Aluminiumsulfaten, Aluminiumhalogeniden und Aluminiumnitraten ausgewählt wird.

10. Verfahren nach Anspruch 9, bei dem es sich bei dem Aluminiumsalz um ein Aluminiumsulfat handelt.

11. Verfahren nach einem der vorhergehenden Ansprüche, bei dem vor oder während des Inkontaktbringens der wässrigen Siliciumdioxiddispersion und des Dienelastomerlatex eine wässrige Haftvermittlerdispersion zugesetzt wird.

12. Masterbatch aus Dienelastomer und Siliciumdioxid, hergestellt nach einem der Ansprüche 1 bis 11.

13. Kautschukzusammensetzung auf Basis mindestens eines Masterbatch nach Anspruch 12.

14. Reifenlauffläche, umfassend eine Zusammensetzung nach Anspruch 13.

15. Reifen oder Halbzeug, umfassend mindestens eine Kautschukzusammensetzung nach Anspruch 13.

**Claims**

1. Method for preparing a masterbatch of diene elastomer and silica comprising the following successive steps:

   - preparing at least one dispersion of silica in water,
   - bringing into contact and mixing an elastomer latex and the aqueous silica dispersion in the presence of an aluminium salt, in order to obtain a coagulum,
   - recovering the coagulum,
   - drying the recovered coagulum in order to obtain the masterbatch;

   the molar content of aluminium cations, defined as the number of moles of aluminium cations of the aluminium salt per unit of silica surface area which is defined as the weight of silica under consideration multiplied by the BET specific surface, is between $1.15 \times 10^{-6}$ and $5 \times 10^{-6}$ mol/m$^2$, the molar content of aluminium cations being calculated in accordance with the description.

2. Method according to Claim 1, in which the molar content of aluminium cations is between $1.19 \times 10^{-6}$ and $4.6 \times 10^{-6}$ mol/m$^2$.

3. Method according to either one of Claims 1 and 2, in which the at least divalent aluminium salt is added to the aqueous silica dispersion before the latter is brought into contact with the elastomer latex.

4. Method according to any one of Claims 1 to 3, in which the stage of recovery of the coagulum is carried out by a filtering or centrifuging operation.

5. Method according to any one of Claims 1 to 4, in which the diene elastomer latex is a natural rubber latex.

6. Method according to Claim 5, in which the natural rubber latex is a concentrated natural rubber latex.

7. Method according to any one of Claims 1 to 6, in which the silica is a precipitated silica.

8. Method according to any one of Claims 1 to 7, in which the amount of silica during the operation in which two dispersions are brought into contact is between 20 phr and 150 phr, parts per hundred parts by weight of elastomer, preferably between 30 phr and 100 phr.

9. Method according to any one of the preceding claims, in which the aluminium salt is chosen from aluminium sulphates, aluminium halides and aluminium nitrates.

10. Method according to Claim 9, in which the aluminium salt is an aluminium sulphate.

11. Method according to any one of the preceding claims, in which an aqueous dispersion of coupling agent is added before or during the operation in which the aqueous silica dispersion and the diene elastomer latex are brought into contact.

12. Masterbatch of diene elastomer and silica prepared according to any one of Claims 1 to 11.

13. Rubber composition based on at least one masterbatch according to Claim 12.

14. Tyre tread comprising a composition according to Claim 13.

15. Tyre or semi-finished product comprising at least one rubber composition according to Claim 13.

**EP 2 766 425 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 501227 A
- EP 692492 A
- EP 692493 A
- EP 735088 A
- EP 767206 A
- EP 786493 A
- EP 881252 A
- WO 9902590 A
- WO 9902601 A
- WO 9902602 A
- WO 9906480 A
- WO 000530 A
- WO 0005301 A
- US 5763388 A
- FR 2952064
- EP 1321488 A

- EP 1323775 A
- WO 0316837 A
- FR 2740778
- US 6013718 A
- WO 2008141702 A
- FR 2765882
- US 5977238 A
- WO 0192402 A
- US 6815473 B
- WO 2004096865 A
- US 20060089445 A
- EP 1127909 A
- US 6503973 B
- WO 2009000750 A
- WO 2009000752 A
- WO 0210269 A

**Littérature non-brevet citée dans la description**

- *The journal of the American Chemical Society,* Février 1938, vol. 60, 309
- Latex concentrates : properties and composition. **K.F. GASELEY ; A.D.T. GORDON ; T.D. PENDLE.** Naturel Rubber Science and Technology. Oxford University Press, 1988
- **C. W. CARR ; 1. M. KOLTHOFF ; E. J. MEEHAN.** Journal of Polymer Science. University of Minesota, 1950, vol. V, 201-206

- JOURNAL OF POLYMER SCIENCE. 1951, vol. VI, 73-81
- **E. J. VANDENBERG ; G. E. HULSE.** ½ Industrial and Engineering Chemistry. Hercules Powder Company, 1948, vol. 40, 932-937
- **J. R. MILLER ; H. E. DIEM ; B. F. GOODRICH.** ½ Industrial and Engineering Chemistry. Chemical Co, 1954, vol. 46, 1065-1073